# FASCICULE DE BREVET EUROPEEN

(11) **EP 0 911 645 B1**
(45) Date de publication et mention de la délivrance du brevet: **22.06.2005**
(21) Numéro de dépôt: 98402614.6
(22) Date de dépôt: 20.10.1998
(51) Int. Cl.: G01S 7/499

(54) **Dispositif optique à modulation de polarisation pour la mesure de distance et/ou de vitesse d'objet**
Optisches Messgerät zur Feststellung der Entfernung zu einem Objekt und/oder der Geschwindigkeit eines Objekts unter Verwendung von modulierter Polarisations
Optical apparatus with polarisation modulation for measuring distance to, or velocity of, an object

(30) Priorité: 21.10.1997 FR 9713166
(43) Date de publication de la demande: 28.04.1999
(73) Titulaire: Thales, 75008 Paris (FR)
(72) Inventeur: Breugnot, Sébastien, 94117 Arcueil Cédex (FR)
(74) Mandataire: Esselin, Sophie

(56) Documents cités:
- WO-A-96/10206
- WO-A-97/10517
- DE-C- 19 542 490
- FR-A- 2 592 721
- GB-A- 2 175 766
- US-A- 4 540 243
- US-A- 4 786 176

## Description

La présente invention concerne un dispositif optique pour la mesure de distance et/ou de vitesse d'objet. Elle concerne le domaine de la télémétrie, c'est à dire la mesure de la distance d'un objet à une position de référence où se trouve la station de mesure. L'invention s'applique plus particulièrement à l'acquisition d'objets mobiles, par la mesure de leur distance et de leur vitesse de déplacement relatif.

La plupart des dispositifs de télémétrie sont réalisés sur le principe de la mesure de temps de propagation ou temps de vol d'une impulsion laser, émise par la station de mesure et rétrodiffusée par l'objet vers la position de référence où l'impulsion est détectée. Ces dispositifs nécessitent des lasers de forte puissance, parfois encombrants et souvent en dehors des normes de sécurité oculaire. Une alternative à l'utilisation de sources impulsionnelles consiste à utiliser des sources optiques dont la fréquence d'émission est modulée, cette technique étant proche de celle utilisée dans les radars. Cependant, elle exige des sources laser de très grande cohérence pour atteindre des portées présentant un intérêt opérationnel. En outre, ce type de dispositif présente, du fait de la détection cohérente, des contraintes de mise en oeuvre qui le rendent complexe.

Pour pallier ces inconvénients, et dans un certain domaine d'applications, l'utilisation de sources laser continues modulées en amplitude constitue une bonne alternative, comme cela est par exemple expliqué dans l'article de Stann et al. (Opt.Eng. 35(11) 3270-3278, 1996). La technique décrite utilise une diode laser commandée par exemple par un signal électrique modulé en fréquence; la diode présente ainsi une puissance d'émission modulée en amplitude, à une fréquence variable dans le temps. Le faisceau d'émission ainsi modulé en amplitude est envoyé sur la cible et la partie du faisceau rétrodiffusée dans le dispositif est focalisée sur une photodiode. Le traitement du signal électrique délivré par la photodiode avec le signal de commande permet de déterminer la distance de la cible. Cette technique présente de nombreux avantages pour des applications civiles ou militaires bas coût dans des domaines d'applications courte ou moyenne portée. En

Cependant, un inconvénient majeur de ces types de dispositifs réside dans le fait qu'ils emploient des modulations d'amplitude rapides (supérieures au mégaherz) qui sont aisément détectées par des dispositifs d'alerte laser (en abrégé DAL). Un DAL permet en effet de détecter dans son champ d'observation des points lumineux dont l'intensité varie rapidement en comparaison des variations temporelles habituellement détectées dans une scène.

Le brevet DE 195 42 490 C décrit un dispositif de mesure de distance basée sur la méthode de Fizeau, et qui comprend notamment un modulateur de polarisation permettant une modulation en polarisation de la lumière incidente avec une fréquence de modulation variable. La détermination de la distance est faite par une analyse de la phase du faisceau réfléchi par la cible.

La présente invention vise, tout en gardant les moyens de traitement du signal mis en oeuvre dans les télémètres à modulation d'amplitude, à rendre le dispositif discret.

Pour cela, la présente invention a pour objet un dispositif optique pour la mesure de la distance et/ou de la vitesse d'un objet selon la revendication 1. polarisation peut être, de manière avantageuse, isotrope, en alternant par exemple polarisations circulaires gauche et droite.

Outre sa discrétion par rapport aux détecteurs d'alerte laser, le dispositif de mesure de distance et/ou d'objet selon l'invention présente l'avantage d'être simple à mettre en oeuvre, compact, bas coût et d'utiliser des sources laser continues de faible puissance, compatibles avec les normes de sécurité oculaire.

D'autres caractéristiques et avantages de l'invention apparaîtront à la lecture de la description qui suit, accompagnée des figures annexées qui représentent respectivement :
- la figure 1, une vue schématique d'un exemple de réalisation du dispositif selon l'invention,
- les figures 2a, 2b, 2c, 2d, les états de polarisation de l'onde émise par la source laser puis rétrodiffusée par l'objet dans un mode de fonctionnement particulier du dispositif selon l'invention,
- la figure 3, des courbes illustrant un exemple de forme du signal de commande dans un mode de fonctionnement particulier du dispositif selon l'invention,
- la figure 4, un autre exemple de réalisation du dispositif selon l'invention, illustrant un mode particulier de mise en oeuvre.

Sur ces différentes figures, les mêmes références se rapportent aux mêmes éléments.

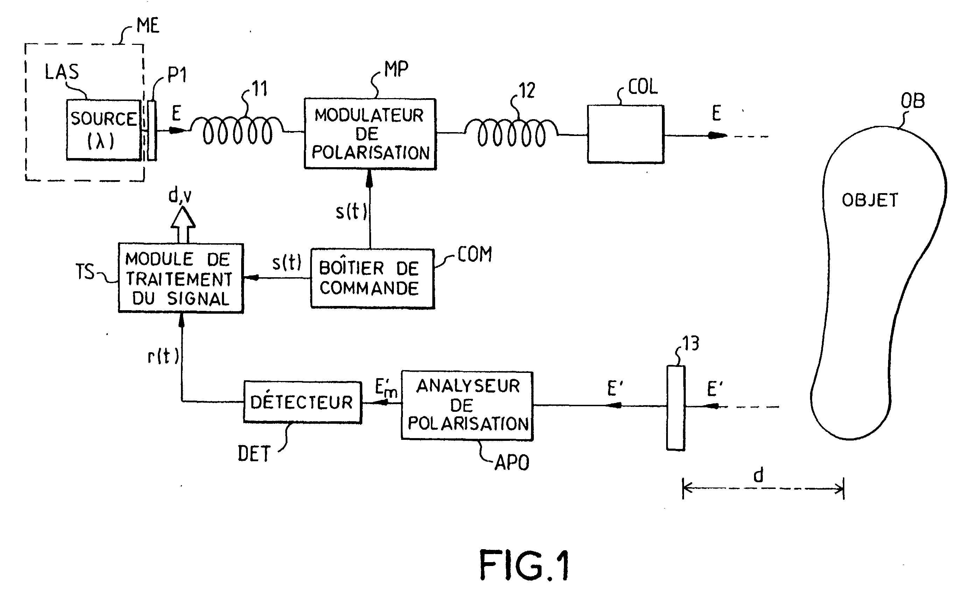

Un exemple de réalisation du dispositif selon l'invention est illustré sur la figure 1. Il représente le cas général d'un dispositif bistatique, c'est à dire comportant une optique d'émission du faisceau éclairant l'objet et une optique de collection du flux rétrodiffusé vers la station de mesure distinctes. Un exemple d'un dispositif monostatique, c'est à dire que les optiques d'émission et de collection sont confondues, est traité plus loin. Le dispositif selon l'invention comprend des moyens d'émission ME comportent une source LAS continue ou quasi-continue, émettant un faisceau lumineux (émis à une longueur d'onde visible ou infrarouge) permettant d'éclairer l'objet. On appelle ici source quasi-continue une source délivrant des impulsions de durée supérieure à la microseconde. Par la suite, sources continues et quasi-continues seront appelées simplement 'sources continues'. Cette source est avantageusement une source laser dont la directivité permet d'obtenir de plus grandes portées en télémétrie. On peut par exemple utiliser un laser solide de type Erbium (Er³⁺), pompé diode, dont la sortie est connectée à une fibre optique, qui émet en continu un faisceau E polarisé linéairement, d'une puissance par exemple égale à quelques centaines de milliwatts, à la longueur d'onde 1.54 µm, longueur d'onde dite de sécurité oculaire car l'oeil est peu vulnérable à cette longueur d'onde. A la sortie de la source sont placés des moyens de polarisation du faisceau d'émission, par exemple un polariseur P₁, afin d'obtenir un faisceau polarisé. Ces moyens peuvent être intégrés dans les moyens d'émission.

Dans l'exemple de la figure 1, le faisceau E traverse un modulateur de polarisation MP qui est connecté au laser par une fibre à maintien de polarisation 11. Le modulateur de polarisation MP permet de faire passer alternativement la polarisation du faisceau E d'un premier état de polarisation à un second état de polarisation selon une loi déterminée par un signal de commande électrique s(t) délivré par un boîtier de commande COM. Le modulateur MP est par exemple constitué d'un cristal électro-optique, par exemple du type Niobate de Lithium. Un retard de phase entre les axes propres du cristal électro-optique permet de modifier la polarisation du faisceau E incident. Ce retard est généré par l'application du signal de commande sur le cristal.

Le faisceau E est ensuite mis en forme par un système optique COL, par exemple un système optique afocal, appelé collimateur, qui permet d'adapter la taille du faisceau et sa divergence au champ que l'on veut couvrir. Le système optique COL est par exemple relié au modulateur de polarisation par une fibre optique 12. Le faisceau E se propage ensuite dans l'espace libre jusqu'à l'objet OB dont on cherche à déterminer la distance d à la station de mesure et/ou la vitesse de déplacement relatif v, puis il est diffusé ou réfléchi par l'objet. La partie E' du flux qui est diffusée ou réfléchie en direction de la station de mesure, que l'on appelle simplement ici 'rétrodiffusée', est collectée grâce à un objectif 13. Le dispositif selon l'invention comporte en outre un analyseur de polarisation APO permettant de transformer la polarisation du faisceau E' rétrodiffusé en une modulation d'amplitude. Le faisceau E'ₘ ainsi modulé est envoyé sur un détecteur optique DET, par exemple une photodiode, qui délivre un signal électrique r(t). Ce signal r(t) est de forme comparable au signal de commande initial (en particulier, il présenté la même modulation de son amplitude) mais son amplitude est atténuée et il présente un décalage temporel égal au temps de propagation aller-retour du dispositif à l'objet. Des moyens TS de traitement du signal permettent, à partir de la comparaison du signal r(t) délivré par le détecteur avec le signal s(t) de commande de déterminer la distance et/ou la vitesse de l'objet, par exemple d'une manière comparable à celle décrite dans l'article précédemment cité sur la télémétrie par modulation d'amplitude. Cependant, le faisceau lumineux incident sur l'objet n'est pas modulé en amplitude; il est donc difficilement détectable par un détecteur d'alerte laser.

Le traitement du signal est semblable à certains types de traitements radar et décrite par exemple dans l'article de l'art antérieur précédemment cité.

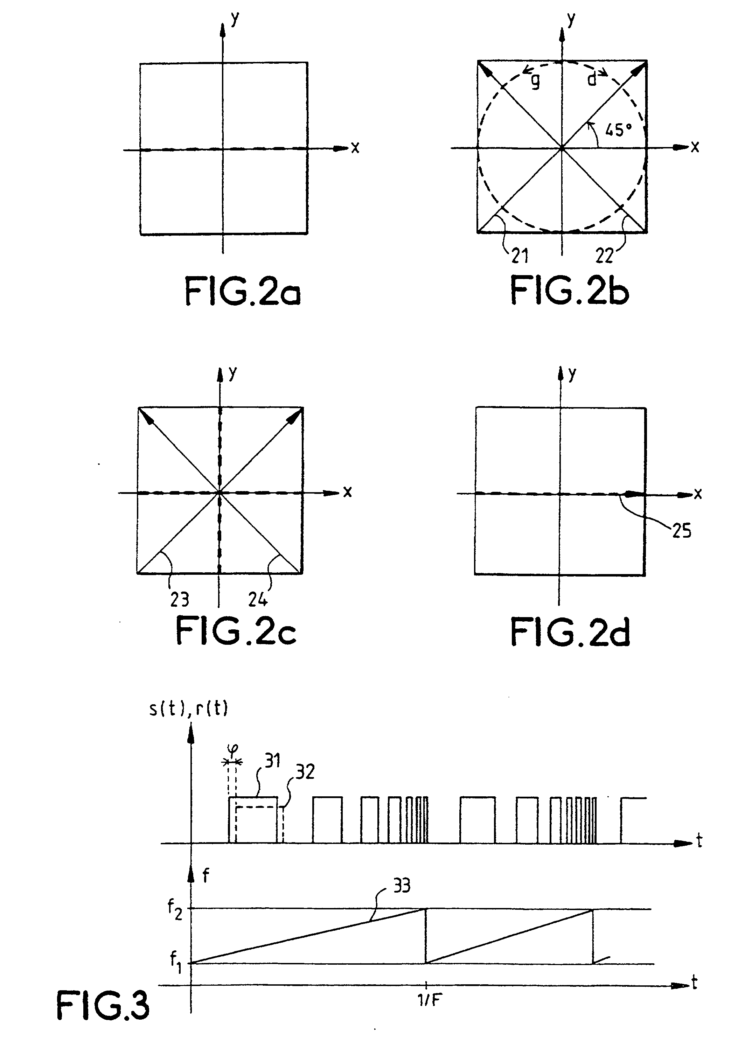

Selon l'invention, le signal de commande est binaire, la polarisation du faisceau d'émission alternant entre les deux états de polarisation suivant la valeur du signal de commande. Par exemple, ces deux états de polarisation sont circulaire gauche et circulaire droite. Cette configuration présente un avantage supplémentaire en ce qui concerne la discrétion du dispositif de télémétrie. En effet, l'onde qui parvient sur l'objet, que sa polarisation soit circulaire gauche ou circulaire droite, est isotrope. Or certains détecteurs d'alerte laser, par exemple s'ils sont équipés d'un polariseur linéaire, peuvent être sensible à l'anisotropie de l'onde incidente. Dans cette configuration, le flux lumineux qui parvient sur le DAL reste constant même si celui-ci est équipé d'un polariseur et donc, demeure invisible pour le DAL. Les figures 2a à 2d illustrent les états de polarisation du faisceau à l'émission puis à la réception dans un exemple particulier de mise en oeuvre d'une telle configuration. Nous supposons ici que la polarisation du faisceau d'émission en sortie du polariseur P₁ est horizontale. Cet état de polarisation est matérialisé, en pointillé, sur la figure 2a. Les axes x et y sont respectivement les axes horizontal et vertical, perpendiculaires à l'axe de propagation du faisceau. Dans cet exemple, comme cela est représenté sur la figure 2b, les axes propres du cristal électro-optique, axe rapide 21 et axe lent 22, sont placés à 45° des axes x et y. Une tension V prenant alternativement pour valeurs V_{π/2} et -V_{π/2} est appliquée sur le cristal de telle sorte que le déphasage généré entre les axes propres du cristal soit respectivement π/2 et -π/2. Dans ce cas, le signal s(t) est par exemple un signal binaire dont l'amplitude passe alternativement de V_{π/2} à -V_{π/2}. La polarisation linéaire selon x devient dans cet exemple une polarisation circulaire gauche (en pointillé, notée g, sur la figure 2b) ou circulaire droite (en pointillé, notée d, sur la figure 2b) en fonction du signe de la tension appliquée. L'analyseur de polarisation APO est par exemple constitué d'une lame quart d'onde dont les axes 23 et 24 sont à 45° des axes x et y, comme cela est représenté sur la figure 2c, et d'un polariseur linéaire dont la direction de transmission 25 est horizontale (selon x), comme cela est représenté sur la figure 2d. Après traversée de la lame quart d'onde, qui génère un déphasage de π/2 entre ses axes propres, la polarisation du faisceau qui était circulaire, devient linéaire, passant d'une polarisation linéaire horizontale à une polarisation linéaire verticale selon le sens de la polarisation circulaire avant le passage à travers la lame quart d'onde (les états de polarisation sont matérialisés en pointillé sur la figure 2c). La direction de transmission du polariseur étant horizontale dans l'exemple choisi, seule la composante horizontale du faisceau E' est transmise, comme cela est représenté (en pointillé) sur la figure 2d; l'amplitude du faisceau E'ₘ qui parvient sur le détecteur DET passe donc d'une valeur maximale à une valeur minimale selon l'état de la polarisation du faisceau rétrodiffusé E' avant son passage à travers l'analyseur APO. Ainsi, le photocourant r(t) délivré par le détecteur constitue un signal électrique, modulé en amplitude, qui peut être traité avec le signal électrique s(t) issu du boîtier de commande COM grâce aux moyens de traitement du signal TS, afin d'extraire la distance d et/ou la vitesse v de l'objet.

Les moyens TS de traitement du signal sont proches de ceux employés en technique radar pour déterminer la distance et/ou la vitesse d'une cible. Lorsque le signal de commande s(t) est un signal binaire, alternant par exemple une valeur haute et une valeur basse à une fréquence prédéterminée, par exemple de l'ordre de la centaine de Mégaherz, le signal r(t) délivré par le détecteur après réception du signal E'ₘ modulé en amplitude présente par rapport au signal de commande un déphasage ϕ. On montre que la distance d de l'objet au dispositif est proportionnelle au déphasage et inversement proportionnelle à la fréquence. Une bonne précision sur la mesure de la distance nécessite de travailler avec des fréquences élevées. Par contre, plus la fréquence est grande, moins la portée du dispositif sera importante du fait des ambiguïtés sur la mesure. Pour pallier ce problème, on peut par exemple utiliser un signal de commande codé selon une séquence prédéterminée. On peut également utiliser un signal de commande périodique et dont la période varie dans le temps. La figure 3 représente un exemple d'un tel signal de commande en fonction du temps (courbe 31, en trait plein). En trait pointillé est représenté le signal r(t) délivré par le détecteur et présentant un déphasage ϕ par rapport au signal de commande. La fréquence de modulation du signal s(t) en fonction du temps est représenté sur la figure 33. Dans l'exemple choisi, elle évolue linéairement entre une fréquence basse, f1 et une fréquence haute, f2, puis revient à la fréquence basse f1, et ce avec une fréquence de répétition F donnée. Dans ce cas, la précision est sensiblement proportionnelle à l'inverse de la fréquence f1 et la portée maximale du dispositif est donnée par l'inverse de la fréquence de répétition F. On peut donc augmenter la portée du dispositif en gardant une résolution similaire. Les moyens de traitement du signal permettent également de déterminer la vitesse d'un objet mobile. Elle est par exemple déterminée à partir de la mesure de la distance, en déterminant la variation de cette mesure en fonction du temps.

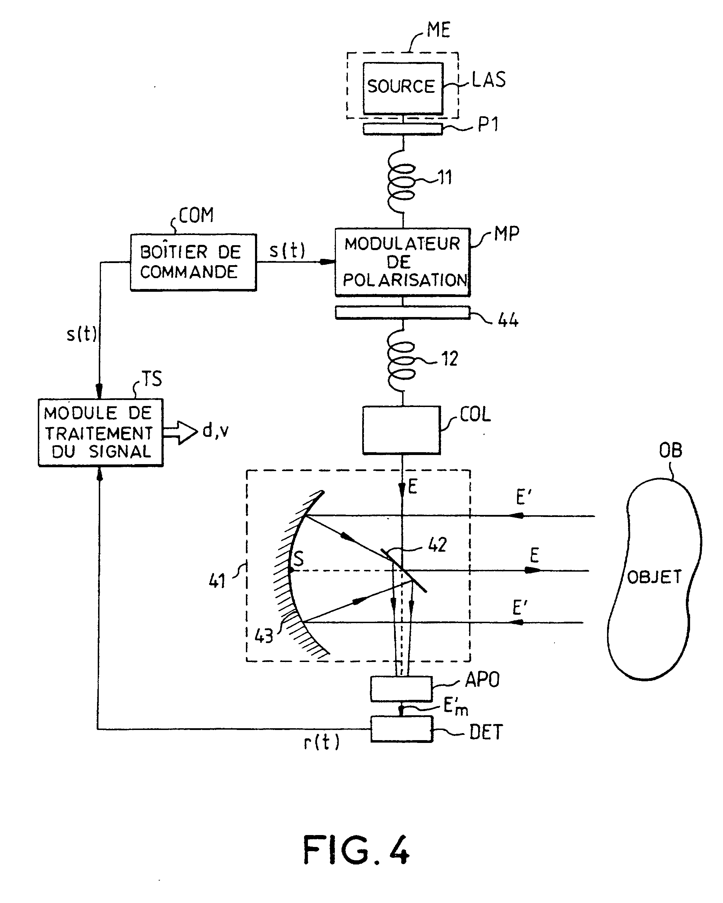

Un autre exemple de réalisation du dispositif selon l'invention est représenté sur la figure 4. Les dispositifs usuels de télémétrie, pour faire passer le faisceau émis et le faisceau collecté après rétrodiffusion sur l'objet par la même optique, utilisent le plus souvent une technique classique de discrimination de la polarisation. Ces dispositifs, dits monostatiques, sont moins encombrants et présentent moins de difficultés d'alignement que les dispositifs bistatiques dans lesquels il y a un décalage spatial entre les faisceaux. Cette technique ne peut être utilisée dans le dispositif selon l'invention du fait du principe même de la détection, basé sur les états de polarisation des faisceaux émis et collecté. Pour être monostatique, le dispositif selon l'invention comporte, selon une variante schématisée sur la figure 4, un système optique 41, qui peut être par exemple un télescope de Newton, assurant l'émission du faisceau E et la collection du flux E'. Le système 41 comporte une lame réfléchissante 42 et un miroir concave 43, par exemple un miroir sphérique, la lame 42 étant approximativement centrée sur l'axe principal SC du miroir, positionnée entre le sommet S du miroir et son foyer, inclinée par rapport à l'axe SC, par exemple avec un angle de 45°, de telle sorte à réfléchir le faisceau E issu du système optique COL vers l'objet tout en permettant de renvoyer vers l'analyseur de polarisation APO le flux E' rétrodiffusé par l'objet et collecté par le miroir 43. La lame 42 est choisie de dimension minimale pour occulter une partie du flux rétrodiffusée E' la plus petite possible.

La portée du dispositif selon l'invention est liée au taux de modulation du signal électrique modulé r(t) représentatif du faisceau E' rétrodiffusé par l'objet. Ce taux de modulation dépend d'un coefficient propre à l'objet, appelé coefficient de polarisation et noté Dₚ. Le calcul montre que cette dépendance est linéaire. Dₚ vaut 0% pour un objet complètement dépolarisant, c'est à dire qu'il y a une perte de cohérence totale entre les composantes orthogonales du champ électrique correspondant au faisceau lumineux E une fois que celui-ci est diffusé par l'objet. Toutefois, ce type d'objet se rencontre très rarement. Le coefficient de polarisation mesuré le plus faible est d'environ 10% (pour le sable par exemple). Le dispositif selon l'invention peut également comporter un élément optique 44 amovible permettant de transformer la modulation de polarisation en modulation d'amplitude pour la mesure de distance et/ou d'objet dont le coefficient de polarisation serait trop faible pour pouvoir effectuer la mesure à partir de la modulation de polarisation du faisceau rétrodiffusé E'. Le dispositif peut alors fonctionner selon deux modes, soit en modulation de polarisation (sans l'élément 44), soit en modulation d'amplitude (avec l'élément 44). Cet élément optique 44 peut être un analyseur de polarisation du type de celui décrit précédemment, comportant une lame quart d'onde et un polariseur linéaire dont la direction de transmission est à 45° des axes propres de la lame. Dans ce cas, un signal de commande s(t) par exemple tel que décrit dans l'exemple de réalisation précédent, permet de moduler la polarisation du faisceau E, la faisant passer de polarisation circulaire gauche à polarisation circulaire droite et l'élément 44 transforme la modulation de polarisation en modulation d'amplitude. L'élément optique 44 peut également être constitué d'un polariseur linéaire, le polariseur P₁, mis en place, étant lui-même un polariseur linéaire dont la direction de transmission est parallèle ou perpendiculaire à celle de l'élément 44, par exemple horizontale. Dans ce cas, le signal s(t) peut être constitué d'un signal dont l'amplitude prend alternativement les valeurs V_{π} ou -V_{π} de telle sorte que le déphasage induit entre les axes propres du cristal électro-optique soit respectivement π ou -π. Ainsi, le modulateur de polarisation se comporte comme une lame demi-onde, faisant passer alternativement la polarisation du faisceau E d'une polarisation linéaire horizontale à une polarisation linéaire verticale dans l'exemple décrit. Après passage à travers l'élément 44, le faisceau E est alors modulé en amplitude. L'analyseur de polarisation APO sur la voie de réception peut être amovible pour être éventuellement retiré lorsque l'élément optique 44 est mis en place pour que le dispositif fonctionne en modulation d'amplitude.

## Revendications

1. Dispositif optique pour la mesure de la distance et/ou de la vitesse d'un objet, comprenant notamment des moyens (ME) d'émission continue ou quasi-continue d'un faisceau lumineux d'émission polarisé (E) permettant d'éclairer l'objet (OB), un boîtier de commande (COM) délivrant un signal électrique binaire (s(t)) de commande, un modulateur (MP) de la polarisation du faisceau d'émission recevant le signal de commande, un détecteur optique (DET) et des moyens (TS) de traitement du signal,
**caractérisé**
**en ce que** le modulateur (MP) permet de faire passer alternativement la polarisation du faisceau d'émission d'un premier état de polarisation à un second état de polarisation, la polarisation du faisceau d'émission alternant entre les deux états de polarisation selon la valeur du signal de commande,
et **en ce que** le dispositif comprend en outre un analyseur de polarisation (APO) permettant de transformer la modulation de polarisation du faisceau (E') rétrodiffusé par l'objet dans le dispositif en une modulation d'amplitude, le détecteur recevant ainsi un faisceau (E'ₘ) modulé en amplitude et délivrant alors un signal électrique (r(t)) présentant un déphasage (φ) par rapport audit signal de commande, les moyens de traitement du signal (TS) permettant, à partir de la comparaison du signal (r(t)) délivré par le détecteur et du signal (s(t)) de commande de déterminer la distance et/ou la vitesse de l'objet.

2. Dispositif selon la revendication 1, **caractérisé en ce que** la loi de modulation de la polarisation du faisceau d'émission (E) fait passer alternativement la polarisation de circulaire gauche à circulaire droite.

3. Dispositif selon l'une des revendications 1 ou 2, **caractérisé en ce que** le signal de commande est codé selon une séquence prédéterminée.

4. Dispositif selon l'une des revendications 1 ou 2, **caractérisé en ce que** le signal de commande est périodique, de période variable dans le temps.

5. Dispositif selon l'une des revendications précédentes, **caractérisé en ce que** le modulateur de polarisation (MP) comporte un cristal électro-optique dont le déphasage entre les axes propres est généré par le signal de commande.

6. Dispositif selon la revendication 5, **caractérisé en ce que** le signal de commande étant binaire, son amplitude passe de V_{π/2} à -V_{π/2}, soit la tension nécessaire pour générer un déphasage passant de π/2 à -π/2 entre les axes propres du cristal électro-optique, **en ce que** les moyens de polarisation (P1) permettent de polariser linéairement le faisceau d'émission (E) et **en ce que** les axes du cristal sont placés à 45° de la direction de polarisation, permettant ainsi de transformer la polarisation linéaire en polarisation circulaire gauche ou droite, selon le signe de la tension.

7. Dispositif selon l'une des revendications précédentes, **caractérisé en ce que** les moyens d'émission (ME) comportent une source laser (LAS) émettant à 1,54 µm.

8. Dispositif selon l'une des revendications précédentes, **caractérisé en ce qu'**il comporte en outre un dispositif optique (41) du type télescope de Newton à travers lequel peuvent passer le faisceau d'émission (E) et le faisceau rétrodiffusée (E').

9. Dispositif selon l'une des revendications précédentes, **caractérisé en ce qu'**il comporte en outre un élément optique (44) amovible, placé après le modulateur de polarisation (MP), et permettant de transformer la modulation de polarisation du faisceau d'émission (E) en modulation d'amplitude.

10. Dispositif selon la revendication 9, **caractérisé en ce que** l'analyseur de polarisation (APO) est amovible, pouvant ainsi être retiré lorsque l'élément optique (44) est mis en place.

## Patentansprüche

1. Optische Vorrichtung zum Messen der Entfernung und/oder der Geschwindigkeit eines Gegenstands, die insbesondere Mittel (ME) zum kontinuierlichen oder praktisch kontinuierlichen Senden eines polarisierten Sendelichtstrahls (E), der es ermöglicht, den Gegenstand (OB) zu beleuchten, eine Steuereinheit (COM), die ein binäres elektrisches Steuersignal (s(t)) liefert, einen Modulator (MP) der Polarisation des Sendestrahls, der das Steuersignal empfängt, einen optischen Detektor (DET) und Mittel (TS) zur Verarbeitung des Signals aufweist, **dadurch gekennzeichnet,**
**dass** der Modulator (MP) es ermöglicht, die Polarisation des Sendestrahls abwechselnd von einem ersten Polarisationszustand in einen zweiten Polarisationszustand übergehen zu lassen, wobei die Polarisation des Sendestrahls entsprechend dem Wert des Steuersignals zwischen den beiden Polarisationszuständen wechselt,
und **dass** die Vorrichtung weiter einen Polarisationsanalysator (APO) aufweist, der es ermöglicht, die Polarisationsmodulation des vom Gegenstand in die Vorrichtung rückgestreuten Strahls (E') in eine Amplitudenmodulation umzuwandeln, wobei der Detektor so einen amplitudenmodulierten Strahl (E'ₘ) empfängt und dann ein elektrisches Signal (r(t)) liefert, das eine Phasenverschiebung (φ) bezüglich des Steuersignals aufweist, wobei die Mittel (TS) zur Verarbeitung des Signals es ausgehend vom Vergleich des vom Detektor gelieferten Signals (r(t)) mit dem Steuersignal (s(t)) ermöglichen, die Entfernung und/oder die Geschwindigkeit des Gegenstands zu bestimmen.

2. Vorrichtung nach Anspruch 1, **dadurch gekennzeichnet, dass** das Modulationsgesetz der Polarisation des Sendestrahls (E) die Polarisation abwechselnd von linkszirkular zu rechtszirkular übergehen lässt.

3. Vorrichtung nach einem der Ansprüche 1 oder 2, **dadurch gekennzeichnet, dass** das Steuersignal gemäß einer vorbestimmten Sequenz codiert ist.

4. Vorrichtung nach einem der Ansprüche 1 oder 2, **dadurch gekennzeichnet, dass** das Steuersignal periodisch ist, mit einer zeitlich variablen Periode.

5. Vorrichtung nach einem der vorhergehenden Ansprüche, **dadurch gekennzeichnet, dass** der Polarisationsmodulator (MP) einen elektrooptischen Kristall aufweist, dessen Phasenverschiebung zwischen den Eigenachsen vom Steuersignal erzeugt wird.

6. Vorrichtung nach Anspruch 5, **dadurch gekennzeichnet, dass** bei einem binären Steuersignal seine Amplitude von V_{π/2} auf -V_{π/2} übergeht, d.h. die Spannung, die notwendig ist, um zwischen den Eigenachsen des elektrooptischen Kristalls eine Phasenverschiebung von π/2 zu -π/2 zu erzeugen, dass die Polarisationsmittel (P1) es ermöglichen, den Sendestrahl (E) linear zu polarisieren, und dass die Achsen des Kristalls in einem Winkel von 45° zur Polarisationsrichtung liegen, wodurch es möglich wird, die lineare Polarisation in eine linkszirkulare oder rechtszirkulare Polarisation umzuwandeln, je nach dem Vorzeichen der Spannung.

7. Vorrichtung nach einem der vorhergehenden Ansprüche, **dadurch gekennzeichnet, dass** die Sendemittel (ME) eine Laserquelle (LAS) aufweisen, die mit 1,54 µm sendet.

8. Vorrichtung nach einem der vorhergehenden Ansprüche, **dadurch gekennzeichnet, dass** sie weiter eine optische Vorrichtung (41) von der Art Newton-Teleskop aufweist, durch die der Sendestrahl (E) und der rückgestreute Strahl (E') hindurchgehen können.

9. Vorrichtung nach einem der vorhergehenden Ansprüche, **dadurch gekennzeichnet, dass** sie weiter ein lösbares optisches Mittel (44) aufweist, das hinter dem Polarisationsmodulator (MP) angeordnet ist und es ermöglicht, die Polarisationsmodulation des Sendestrahls (E) in eine Amplitudenmodulation umzuwandeln.

10. Vorrichtung nach Anspruch 9, **dadurch gekennzeichnet, dass** der Polarisationsanalysator (APO) lösbar ist und somit entfernt werden kann, wenn das optische Element (44) eingesetzt ist.

## Claims

1. Optical device for measuring the distance to and/or the velocity of an object, comprising especially emission means (EM) for continuously or almost continuously emitting a polarized emission light beam (E) for illuminating the object (OB), a control unit (CON) delivering a binary electrical control signal (s(t)), an emission beam polarization modulator (PM) receiving the control signal, an optical detector (DET) and signal processing means (SP), **characterized in that** the modulator (PM) is used to alternately switch the polarization of the emission beam from a first polarization state to a second polarization state, the polarization of the emission beam alternating between the two polarization states depending on the value of the control signal, and **in that** the device furthermore includes a polarization analyser (PA) for converting the polarization modulation of the beam (E') backscattered by the object into the device as an amplitude modulation, the detector thus receiving an amplitude-modulated beam (E'ₘ) and therefore delivering an electrical signal (r(t)) having a phase shift (φ) relative to the said control signal, the signal processing means (SP) making it possible, by comparing the signal (r(t)) delivered by the detector with the control signal (s(t)), to determine the distance to and/or the velocity of the object.

2. Device according to Claim 1, **characterized in that** the law for modulating the polarization of the emission beam (E) alternately switches the polarization from left circular to right circular.

3. Device according to either of Claims 1 and 2, **characterized in that** the control signal is encoded according to a predetermined sequence.

4. Device according to either of Claims 1 and 2, **characterized in that** the control signal is periodic, with a period that varies over time.

5. Device according to one of the preceding claims, **characterized in that** the polarization modulator (PM) comprises an electrooptic crystal, the phase shift between the two intrinsic axes of which is generated by the control signal.

6. Device according to Claim 5, **characterized in that**, since the control signal is binary, its amplitude passes from V_{π/2} to - V_{π/2}, i.e. the voltage needed to generate a phase shift switching from π/2 to -π/2 between the intrinsic axes of the electrooptic crystal, **in that** the polarization means (P1) make it possible to linearly polarize the emission beam (E) and **in that** the axes of the crystal are placed at 45° to the direction of polarization, thus making it possible to convert the linear polarization into left circular or right circular polarization depending on the sign of the voltage.

7. Device according to one of the preceding claims, **characterized in that** the emission means (EM) comprise a laser source (LAS) emitting at 1.54 µm.

8. Device according to one of the preceding claims, **characterized in that** it furthermore includes an optical device (41) of the Newton's telescope type through which the emission beam (E) and the backscattered beam (E') can pass.

9. Device according to one of the preceding claims, **characterized in that** it furthermore includes a removable optical element (44) placed after the polarization modulator (PM), said optical element making it possible to convert the polarization modulation of the emission beam (E) into amplitude modulation.

10. Device according to Claim 9, **characterized in that** the polarization analyser (PA) is removable, thus being possible for it to be removed when the optical element (44) is in place.
